Europäisches Patentamt

European Patent Office

Office européen des brevets

(19)

(11) Veröffentlichungsnummer: **0 233 473 B1**

(12)

# EUROPÄISCHE PATENTSCHRIFT

(45) Veröffentlichungstag der Patentschrift: **04.03.92**

(21) Anmeldenummer: **87100485.9**

(22) Anmeldetag: **16.01.87**

Die Akte enthält technische Angaben, die nach dem Eingang der Anmeldung eingereicht wurden und die nicht in dieser Patentschrift enthalten sind.

(51) Int. Cl.⁵: **C08L 67/02**, C08L 69/00,
//(C08L67/02,69:00,51:00),
(C08L69/00,67:02,51:00)

(54) Thermoplastische Formmassen auf der Basis von Polycarbonaten und Polyestern.

(30) Priorität: **20.01.86 DE 3601422**

(43) Veröffentlichungstag der Anmeldung:
**26.08.87 Patentblatt 87/35**

(45) Bekanntmachung des Hinweises auf die Patenterteilung:
**04.03.92 Patentblatt 92/10**

(84) Benannte Vertragsstaaten:
**BE DE FR GB NL**

(56) Entgegenhaltungen:
EP-A- 0 030 618     EP-A- 0 033 393
EP-A- 0 064 648     EP-A- 0 142 675
EP-A- 0 158 931     EP-A- 0 206 267
WO-A-85/05117       FR-A- 2 331 574
GB-A- 2 040 958     US-A- 4 554 315

(73) Patentinhaber: **BASF Aktiengesellschaft
Carl-Bosch-Strasse 38
W-6700 Ludwigshafen(DE)**

(72) Erfinder: **Taubitz, Christof, Dr.
In der Dreispitz 15
W-6706 Wachenheim(DE)**
Erfinder: **Hub, Hans-Henning, Dr.
Herrnsheimer Hauptstrasse 127 a
W-6520 Worms 24(DE)**
Erfinder: **Mitulla, Konrad, Dr.
Schwalbenweg 31
W-6700 Ludwigshafen(DE)**
Erfinder: **Knoll, Manfred
Pfrimmstrasse 1
W-6521 Wachenheim(DE)**

EP 0 233 473 B1

**Beschreibung**

Die Erfindung betrifft thermoplastische Formmassen auf der Basis von Polycarbonaten und Polyestern, deren Verwendung zur Herstellung von Formteilen und die aus den thermoplastischen Formmassen hergestellten Formteile.

Polymermischungen aus thermoplastischen Polyestern und Polycarbonaten sind an sich bekannt. Sie weisen gegenüber den reinen Polyestern verbesserte mechanische Eigenschaften, insbesondere eine verbesserte Schlagzähigkeit auf, wie der DE-A 2 417 002 zu entnehmen ist.

Zur Verbesserung der Schlagzähigkeit von Polyester/Polycarbonat-Mischungen, insbesondere in der Kälte, sind bereits verschiedene Verfahren bekannt.

In der DE-C 2 343 609 werden einer Mischung aus Polycarbonat und Polyester 2 bis 35 Gew.% eines Pfropfcopolymeren aus Polybutadien zugesetzt, auf das eine Hülle aus Vinylmonomeren aufgepfropft ist.

Aus der EP-A 20 737 sind Polyester/Polycarbonat-Mischungen bekannt, die selektiv hydrierte Styrol-Dien-Blockcopolymere enthalten.

Der EP-A 20 605 ist zu entnehmen, daß die Schlagzähigkeit von Polyestern oder Polycarbonaten durch Zusatz eines Ethylencopolymeren verbessert werden kann.

Schließlich sind in der EP-A 106 027 Mischungen beschrieben, die aus Polycarbonat, einem Ethylencopolymeren, einem Polyester und einem Pfropfkautschuk bestehen.

Weiterhin sind aus der EP-A 142 675 thermoplastische Formmassen aus thermoplastischem Polyester und Pfropfkautschuken mit einem Ankopplungsgrad von mindestens 0,03 bekannt, die auch Polycarbonate enthalten können.

Häufig erfüllen jedoch die vorgeschriebenen Formmassen die ständig steigenden Ansprüche hinsichtlich der Zähigkeit und Wärmeformbeständigkeit nicht, und die Verarbeitbarkeit und die Chemikalienbeständigkeit sind oft unbefriedigend. Aufgabe der vorliegenden Erfindung war es deshalb, Formmassen auf der Basis von Polycarbonaten und Polyestern zu entwickeln, die diese Nachteile nicht aufweisen. Insbesondere sollte die Chemikalienbeständigkeit verbessert werden.

Erfindungsgemäß wird diese Aufgabe durch thermoplastische Formmassen auf der Basis von

A) Polycarbonaten und

B) Polyestern

gelöst, die durch einen Gehalt von 1 bis 30 Gew.%, bezogen auf A) + B) + C), eines Pfropfcopolymerisats C) gekennzeichnet sind, das aufgebaut ist aus

$C_1$) 60 bis 99 Gew.% eines elastomeren Komponente, aufgebaut aus Acrylsäureestern, Methacrylsäureestern und/oder konjugierten Dienen, sowie gewünschtenfalls weiteren Comonomeren, als Pfropfgrundlage, und

$C_2$) 1 bis 40 Gew.% eines Epoxygruppen-enthaltenden Monomeren als Pfropfauflage.

Bevorzugte Ausführungsformen der erfindungsgemäßen thermoplastischen Formmassen sind den Unteransprüchen zu entnehmen.

Die erfindungsgemäßen Formmassen weisen neben einer hervorragenden Kälteschlagzähigkeit eine sehr gute Wärmeformbeständigkeit und Chemikalienbeständigkeit auf.

Im folgenden wird der Aufbau der erfindungsgemäßen Formmassen aus den Komponenten beschrieben.

Komponente A)

Unter Polycarbonaten im Sinne der vorliegenden Erfindung sind sowohl Homopolycarbonate als auch Copolycarbonate zu verstehen. Vorzugsweise werden die Polycarbonate ausgehend von Diphenolen hergestellt, wobei beispielsweise Dihydroxydiphenyle, Di-(hydroxyphenyl)-alkane und Di-(hydroxyphenyl)-ether zu nennen sind. Grundsätzlich sind aber auch alle anderen, für die Herstellung von Polycarbonaten geeigneten Diphenole verwendbar. Einzelheiten hierzu sind der Monographie von H.Schnell, "Chemistry and Physics of Polycarbonates", Intersience Publ., New York 1964, sowie der US-A 2 999 835 und der DE-A 22 48 817 zu entnehmen. Polycarbonate auf der Basis von 2,2-Di(4-hydroxyphenyl)propan (im folgenden als "Bisphenol A" bezeichnet) werden besonders bevorzugt.

Die Synthese dieser Polycarbonate kann in an sich bekannter Weise erfolgen. Näheres hierzu ist beispielsweise der US-A 2 999 835 und der GB-A 772 627 zu entnehmen.

Die relative Viskosität $\eta_{spec}/c$ (nach E.Vollmert, Grundriß der makromolekularen Chemie, Band 3, Seite 55 ff, E. Vollmer-Verlag, Karlsruhe 1979) der eingesetzten Polycarbonate liegt vorzugsweise im Bereich von 1,1 bis 1,5 ml/g (gemessen an einer 0,5 %igen Lösung in Dichlormethan bei 25 °C), was einem mittleren Molekulargewicht $M_n$ von 25 000 bis 200 000 entspricht.

Der Anteil der Komponente A) an den erfindungsgemäßen Formmassen unterliegt an sich keiner besonderen Beschränkung, vorzugsweise liegt er jedoch im Bereich von 8 bis 90 Gew.%, bezogen auf das Gesamtgewicht der Komponenten A) + B) + C).

Komponente B)

Die in den erfindungsgemäßen Formmassen enthaltenen Polyester sind an sich ebenfalls bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$-$C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecansäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente, wie z.B. Polyethylenterephthalat oder Polybutylenterephthalat werden besonders bevorzugt.

Die relative Viskosität $\eta_{spec}/c$ der Polyester, gemessen an einer 0,5 %igen Lösung in einem Phenol/o-Dichlorbenzolgemisch (Gewichtsverhältnis 3:2) bei 25°C liegt im allgemeinen im Bereich von 1,2 bis 1,8 ml/g.

Der Anteil der Komponente B) an den erfindungsgemäßen Formmassen ist wie der der Komponente A) nicht kritisch, beträgt jedoch vorzugsweise 8 bis 90 Gew.%, bezogen auf das Gesamtgewicht der Komponenten A) + B) + C).

Komponente C)

Die erfindungsgemäßen thermoplastischen Formmassen enthalten als erfindungswesentliche Komponente C) ein Pfropfcopolymerisat, welches aus

$C_1$) 60 bis 99 Gew.% einer elastomeren Komponente, aufgebaut aus Acryl säureestern, Methacrylsäureestern und/oder konjugierten Dienen, sowie gewünschtenfalls weiteren Comonomeren, als Pfropfgrundlage und

$C_2$) 1 bis 40 Gew.% eines Epoxigruppen-enthaltenden Monomeren als Pfropfauflage

aufgebaut ist.

Die elastomere Komponente (Kautschukkomponente $C_1$) weist im allgemeinen eine Glasübergangstemperatur von unter 0°C, vorzugsweise von unter -20°C auf. Bevorzugt werden als Kautschukkomponenten Homopolymerisate aus Alkylacrylaten und/oder Methacrylalkylaten mit 1 bis 8 C-Atomen im Alkylrest und/oder Homo- und/oder Copolymerisate konjugierter Diene, z.B. 1,3-Butadien und Isopren verwendet. Als besonders bevorzugtes Beispiel sei eine Kautschukkomponente (Elastomer) aufgebaut aus Polybutadien und/oder Poly-n-butylacrylat genannt.

Falls gewünscht, können bei der Herstellung der elastomeren Komponente noch weitere Comonomere, vorzugsweise vinylaromatische Monomere mit bis zu 12 C-Atomen, wie z.B. Styrol oder Mischungen Styrol/Acrylnitril eingesetzt werden.

Als Komponente $C_2$) eignen sich prinzipiell alle Epoxigruppen-enthaltenden Monomere, die auf die Pfropfgrundlage $C_1$) aufgepfropft werden können. Die bisherigen Ergebnisse deuten darauf hin, daß zwischen der Epoxigruppe des Pfropfcopolymerisats und dem Polyester bzw. Polycarbonat eine Reaktion stattfindet. Ob dabei echte kovalente Bindungen entstehen, kann noch nicht mit Sicherheit gesagt werden. Die Wechselwirkung zwischen der Epoxigruppe des Pfropfcopolymerisats und dem Polyester bzw. Polycarbonat ist wahrscheinlich für den kompatibilitätserhöhenden Effekt des Pfropfcopolymerisates verantwortlich.

Nur stellvertretend für die Vielzahl der geeigneten, Epoxigruppen-enthaltenden Monomeren seien hier Glycidylderivate, insbesondere Glycidylacrylsäureester und/oder Glycidylmethacrylsäureester genannt, die wegen ihrer leichten Verfügbarkeit bevorzugt werden.

Die Herstellung des Pfropfcopolymerisats C) kann auf mehrere Arten erfolgen, die an sich bekannt sind. Wesentlich ist lediglich, daß die Epoxigruppen der Pfropfauflage im endgültigen Copolymerisat in freier Form zur Verfügung stehen. So kann die Pfropfgrundlage beispielsweise durch aufeinanderfolgende Polymerisation der einzelnen Monomeren oder durch gleichzeitigen Einsatz aller Monomeren hergestellt werden. Die Aufpfropfung des Epoxigruppen-enthaltenden Pfropfmonomeren kann auch in Gegenwart weiterer Monomerer, die nicht mit der Epoxigruppe reagieren, erfolgen. Nähere Einzelheiten des Herstellungsverfahrens können z.B. der DE-C 12 60 135 entnommen werden.

Der Anteil der Komponente $C_1$) am Pfropfcopolymerisat beträgt 60 bis 99 Gew.%, vorzugsweise 90 bis 98 Gew.% und der Anteil der elastomeren Komponente $C_2$) entsprechend 1 bis 40 Gew.%, vorzugsweise 2 bis 10 Gew.%.

Der Anteil der Komponente C) an den erfindungsgemäßen thermoplastischen Formmassen liegt im Bereich von 1 bis 30, vorzugsweise von 2 bis 20 Gew.%.

Das Pfropfcopolymerisat C) kann in den Komponenten A) (Polycarbonat) und B) (Polyester) dispergiert in Form von unimodal verteilten Teilchen im Größenbereich von 50 bis 200 nm (d.h. die Verteilungskurve der Teilchengrößen weist nur ein Maximum auf) oder in Form von bimodal verteilten Teilchen im Bereich von 50 bis 700 nm (d.h. die Verteilungskurve der Teilchengrößen weist 2 Maxima auf) vorliegen.

Neben den Komponenten A) bis C) können die erfindungsgemäßen Formmassen elastomere Bestandteile enthalten, die zur Verbesserung der Schlagzähigkeit beitragen (schlagzäh modifizierende Kautschuke). Die für diesen Zweck verwendbaren Kautschuke sind dem Fachmann an sich bekannt. Beispielsweise können Kautschuke verwendet werden, deren Zusammensetzung gleich oder ähnlich der Kautschukkomponente $C_1$) des Pfropfcopolymerisats ist. Weitere Beispiele sind Butadien-/Styrol-Blockcopolymerisate, Styrol-Acrylnitril-Copolymerisate, Acrylnitril-Butadien-Styrol-Copolymerisate, um nur einige zu nennen. Der Anteil der schlagzähigkeitsverbessernden Kautschuke beträgt im allgemeinen nicht mehr als 20 Gew.%, bezogen auf das Gesamtgewicht der Komponenten A) bis C).

Weiterhin können die erfindungsgemäßen Formmassen Zusatzstoffe und Verarbeitungshilfsmittel enthalten. Beispielsweise seien hier Stabilisatoren, Oxidationsverzögerer, Mittel gegen die Wärmezersetzung und die Zersetzung durch ultraviolettes Licht, Gleit- und Entformungsmittel, Färbemittel, Verstärkungsmittel und Metallflocken und/oder metallbeschichtete Fasern zur Erhöhung der elektrischen Leitfähigkeit sowie Weichmacher genannt.

Stabilisatoren können in jedem Stadium der Herstellung der Formmassen zugesetzt werden, vorzugsweise jedoch zu einem möglichst frühen Zeitpunkt, um zu verhindern, daß die Zersetzung bereits beginnt, bevor der Stabilisator eingearbeitet ist.

Oxidationsverzögerer und Wärmestabilisatoren für Polymere sind dem Fachmann bekannt. Hier seien nur die Halogenide von Metallen der Gruppe 1, sterisch gehinderte Phenole, Hydrochinone, substituierte Derivate derselben und Mischungen der vorgenannten Verbindungen erwähnt. Die Konzentration dieser Zusätze beträgt im allgemeinen nicht mehr als 1 Gew.%, bezogen auf das Gesamtgewicht der Formmassen.

UV-Stabilisatoren sind dem Fachmann ebenfalls bekannt, deshalb seien hier nur beispielsweise substituierte Resorcine, Salicylate, Benzotriazole und Benzophenone genannt. Der Anteil dieser Stabilisatoren beträgt im allgemeinen bis zu 2 Gew.%, bezogen auf das Gesamtgewicht der Formmassen.

Gleit- und Entformungsmittel, die im allgemeinen bis zu 1 Gew.% der thermoplastischen Formmasse ausmachen können, sind beispielsweise Stearinsäure, Stearinalkohol, Stearinsäureester und deren Amide.

Als Farbstoffe bzw. Pigmente seien hier stellvertretend Nigrosin, Titandioxid, Cadmiumsulfid, Cadmiumsulfid-selenid, Phthalocyanine, Ultramarinblau und Ruß genannt; stellvertretend für die Füllstoffe und Verstärkungsmittel seien Kohlenstoffasern, Glasfasern, amorphe Kieselsäure, Asbest, Kalziumsilikat, Aluminiumsilikat, Magnesiumcarbonat, Kaolin, Kreide, gepulverter Quarz, Glimmer und Feldspat erwähnt.

Weiterhin können Keimbildungsmittel wie Talkum, $CaF_2$, Natriumphenylenphosphinat, Aluminiumoxid und feinteiliges Polytetrafluorethylen (PTFE) sowie Weichmacher wie Phthalsäureester und Benzol-und/oder Toluolsulfonamide zugesetzt werden.

Der Anteil aller vorgenannten Zusätze ist an sich nicht kritisch, doch muß selbstverständlich darauf geachtet werden, daß insgesamt eine gute Verträglichkeit der Komponenten in den eingesetzten Mengen gegeben ist.

Setzt man den erfindungsgemäßen thermoplastischen Formmassen Metallflocken, beispielsweise aus Aluminium, Kupfer, Silber oder Nickel oder Legierungen dieser Metalle oder Metallfasern aus Silber, Kupfer, Nickel, Aluminium oder Edelstahl zu, so kann damit die Leitfähigkeit der Formmassen beträchtlich gesteigert werden, wodurch diese für die Abschirmung elektromagnetischer Wellen verwendet werden können.

Zur Erhöhung der Leitfähigkeit können auch metallbeschichtete Glas-, Graphit- und/oder Aramidfasern, die mit Nickel, Silber, Kupfer oder Aluminium beschichtet sind, zugesetzt werden. Setzt man bis 40 Gew.%, vorzugsweise 25 bis 30 Gew.%, bezogen auf das Gesamtgewicht der Formmasse, dieser leitfähigkeitserhöhenden Zusätze zu, und hält das Verhältnis von Metallflocken zu Metallfasern oder metallbeschichteten Fasern vorzugsweise im Bereich von 4:1 bis 14:1, so steigt die Leitfähigkeit der Formmasse von $10^{-18}$ $Scm^{-1}$ auf 1 $Scm^{-1}$.

Die Herstellung der erfindungsgemäßen Formmassen kann in an sich bekannter Weise, beispielsweise durch Schmelzmischen des Polyesters und des Polycarbonats mit den übrigen Komponenten in einem geschlossenen System erfolgen. Hierfür wird üblicherweise ein Mehrfachschneckenextruder, z.B. ein 2-Wellenextruder oder andere herkömmliche Plastifizierungsvorrichtungen, wie z.B. eine Brabender-Mühle, eine Banbury-Mühle oder dgl. verwendet. Die Formmassen können aber auch durch gemeinsames Ausfällen aus einer Lösung oder durch Mischen (Trockenmischen) der Komponenten und anschließendes Schmelzstrangpressen des trockenen Gemisches hergestellt werden.

Die erfindungsgemäßen thermoplastischen Formmassen zeichnen sich durch eine hohe Kerbschlagzähigkeit auch bei tiefen Temperaturen und eine gute Chemikalienbeständigkeit aus. Sie sind für die Spritzgieß- und Extrusionsverarbeitung und zur Herstellung von hochbeanspruchbaren, thermostabilen, schlagzähen Formteilen für technische Zwecke aller Art geeignet. Mit leitfähigen Zusätzen gefüllte erfindungsgemäße Formmassen können für die Abschirmung elektromagnetischer Wellen verwendet werden.

Beispiele 1 bis 10

In den Beispielen wurden folgende Komponenten eingesetzt:

Komponente A) (Polycarbonat):

Bisphenol-A-polycarbonat mit einer relativen Viskosität von 1,36, gemessen an einer 0,5 %igen Lösung in Dichlormethan bei 25 °C.

Komponente B) (Polyester):

$B_1$) Polybutylenterephthalat mit einer relativen Viskosität von 1,62, gemessen an einer 0,5 %igen Lösung in einem Phenol/o-Dichlorbenzolgemisch (Gewichtsverhältnis 3:2) bei 25 °C

$B_2$) Polyethylenterephthalat mit einer relativen Viskosität von 1,39, gemessen unter den gleichen Bedingungen wie unter $B_1$) beschrieben.

Komponente C) (Pfropfcopolymerisat):

Ein Polybutadienlatex wurde durch Polymerisation von 60 Gewichtsteilen Butadien in Gegenwart einer Lösung von 0,5 Teilen tert.-Dodecylmercaptan, 0,7 Teilen Kalium-$C_{14}$-alkylsulfonat als Emulgator, 0,2 Teilen Kaliumperoxodisulfat und 0,2 Teilen Natriumpyrophosphat in 80 Teilen Wasser bei 65 °C hergestellt. Nach Beendigung der Polymerisation wurde der Polymerisationsautoklav entspannt; der Umsatz betrug 98 %.

Die mittlere Teilchengröße des so erhaltenen Polybutadienlatex lag bei 0,1 μm. Dieser Latex wurde durch Zusatz von 25 Gewichtsteilen einer Emulsion eines Copolymeren aus 96 Gewichtsteilen Ethylacrylat und 4 Teilen Acrylsäureamid (Feststoffgehalt der Emulsion: 10 Gew.%) agglomeriert, wobei ein Polybutadienlatex mit einer mittleren Teilchengröße von 0,3 bis 0,4 μm entstand.

Die in Tabelle 1 angegebenen Mengen des so erhaltenen Polybutadien-Latex $C_1$) wurden mit der in der Tabelle 1 unter SAN angegebenen Menge einer Mischung aus Styrol und Acrylnitril (Verhältnis 70:30) und 50 Gewichtsteilen Wasser gemischt und unter Rühren nach Zusatz von 0,08 Gewichtsteilen Kaliumpersulfat und 0,05 Gewichtsteilen Lauroylperoxid 3 Stunden auf 65 °C erhitzt. Anschließend wurden ohne weitere Zusatzstoffe die in Tabelle 1 unter $C_2$ angegebene Menge Glycidylmethacrylat während 2 Stunden zugegeben, wobei die Temperatur während der Zugabe bei 65 °C lag. Das so hergestellte Pfropfcopolymerisat wurde mit Hilfe einer Magnesiumsulfatlösung bei 95 °C aus der Dispersion gefällt, mit Wasser gewaschen und im warmen Luftstrom getrocknet.

### Tabelle 1

| Erfindungsgemäße Pfropfcopolymerisate | $C_1$ Gew.% | SAN Gew.% | $C_2$ Gew.% |
|---|---|---|---|
| $C_a$ | 60 | 35 | 5 |
| $C_b$ | 67 | 30 | 3 |
| $C_c$ | 63 | 29 [1] | 8 |
| **Vergleichs-Pfropfcopolymerisate** | | | |
| $C_d$ | 60 | 35 | 5 [2] |
| $C_e$ | 67 | 30 | 3 [2] |

[1] Methylmethacrylat statt Styrol/Acrylnitril

[2] Methylmethacrylat statt Glycidylmethacrylat

Die Komponenten A) bis C) wurden in einem Zweischneckenextruder bei 270°C gemischt, granuliert und zu Formkörpern verarbeitet.

Die Zusammensetzung der Formmassen und die Ergebnisse der Schlagzähigkeitsmessungen sowie der Bestimmungen der Vicat-Temperatur sind der nachfolgenden Tabelle 2 zu entnehmen.

Tabelle 2 (alle Angaben in Gewichtsprozent)

| Beispiel Nr. | Komp. A | Komp. B | Komp. C | Kerbschlagzähigkeit [kJm$^{-2}$] | | | Vicat-Temp. °C |
|---|---|---|---|---|---|---|---|
| | | | | 23°C | -20°C | -40°C | |
| 1* | 50 | 40 B$_a$ | 10 C$_d$ | 45 | 8 | 6 | 120 |
| 2* | 50 | 40 B$_a$ | 10 C$_e$ | 42 | 8 | 7 | 122 |
| 3* | 75 | 15 B$_b$ | 10 C$_e$ | 41 | 7 | 6 | 130 |
| 4* | 40 | 50 B$_b$ | 10 C$_d$ | 40 | 8 | 5 | 128 |
| 5 | 50 | 40 B$_a$ | 10 C$_a$ | 47 | 19 | 12 | 123 |
| 6 | 40 | 50 B$_a$ | 10 C$_b$ | 45 | 13 | 9 | 119 |
| 7 | 40 | 40 B$_a$ | 20 C$_c$ | 50 | 15 | 10 | 120 |
| 8 | 75 | 15 B$_b$ | 10 C$_b$ | 50 | 31 | 9 | 139 |
| 9 | 50 | 35 B$_b$ | 15 C$_a$ | 52 | 19 | 11 | 134 |
| 10 [1] | 45 | 42 B$_b$ | 8 C$_b$ | 45 | 14 | 7 | 129 |

* = Vergleichsbeispiele

1) Hier wurden als schlagzähigkeitserhöhender Kautschuk 5 Gew.% eines Ethylen-n-Butylacrylat-Acrylsäure-Copolymerisats zugesetzt, das unter Druck aus 60 Gew.% Ethylen, 35 Gew.% n-Butylacrylat und 5 Gew.% Acrylsäure hergestellt worden war.

Die Ergebisse zeigen, daß die erfindungsgemäßen thermoplastischen Formmassen bei tiefen Temperaturen (-20°C bzw. -40°C) eine deutlich erhöhte Kerbschlagzähigkeit gegenüber herkömmlichen Formmassen aufweisen. Auch die Vicat-Temperatur erfindungsgemäßer Formmassen liegt über der von herkömmlichen Formmassen entsprechender Polycarbonat/Polyesterzusammensetzungen.

**Patentansprüche**

1. Thermoplastische Formmassen auf der Basis von

A) Polycarbonaten und

B) Polyestern,

mit einem Gehalt von 1 bis 30 Gew.%, bezogen auf A) + B) + C)

C) eines Pfropfcopolymerisats aufgebaut aus

$C_1$) 60 bis 99 Gew.% einer elastomeren Komponente aufgebaut aus Acrylsäureestern, Methacrylsäureestern und/oder konjugierten Dienen sowie gewünschtenfalls weiteren Comonomeren, als Pfropfgrundlage, und

$C_2$) 1 bis 40 Gew. eines Monomeren als Pfropfauflage.

dadurch gekennzeichnet, daß die Pfropfauflage aus einem Epoxygruppen-enthaltenden Monomeren aufgebaut ist

2. Thermoplastische Formmassen nach Anspruch1, gekennzeichnet durch einen Gehalt an schlagzäh modifizierendem Kautschuk.

3. Thermoplastische Formmassen nach den Ansprüchen 1 und 2, gekennzeichnet durch folgende Gehalte:
Polycarbonat A) 8 bis 90 Gew.%
Polyester B) 8 bis 90 Gew.%
Pfropfcopolymerisat C) 2 bis 30 Gew.%.

4. Verwendung der thermoplastischen Formmassen gemäß den Ansprüchen 1 bis 3 zur Herstellung von Formteilen.

5. Formkörper, erhältlich aus thermoplastischen Formmassen gemäß den Ansprüchen 1 bis 3.

## Claims

1. A thermoplastic molding material based on
    A) a polycarbonate and
    B) a polyester,
    which contains from 1 to 30% by weight, based on A) + B) + C),
    C) of a graft copolymer based on
        $C_1$) from 60 to 99% by weight of an elastomeric component based on acrylic esters, methacrylic esters and/or conjugated dienes, if desired, further comonomers, as grafting base and
        $C_2$) from 1 to 40% by weight of a monomer as applied graft wherein said applied graft is based on an epoxy-containing monomer.

2. A thermoplastic molding material as claimed in claim 1, which contains an impact strength modifier rubber.

3. A thermoplastic molding material as claimed in claim 1 or 2, which contains from 8 to 90% by weight of polycarbonate A), from 8 to 90% by weight of polyester B) and from 2 to 30% by weight of graft copolymer C).

4. Use of a thermoplastic molding material as claimed in any of claims 1 to 3, for producing moldings.

5. A molding obtainable from a thermoplastic molding material as claimed in any of claims 1 to 3.

## Revendications

1. Masses à mouler thermoplastiques à base de
    A) polycarbonates et de
    B) polyesters,
    avec une teneur de 1 à 30% en poids, par rapport à A) + B) + C),
    C) d'un copolymère greffé se composant de
        $C_1$) 60 à 99% en poids d'un composant élastomère constitué par des esters d'acide acrylique, des esters d'acide méthacrylique et/ou des diènes conjugués avec, au besoin, d'autres comonomères, en tant que base de greffage, et
        $C_2$) 1 à 40% en poids d'un monomère, en tant que greffons,
    caractérisées en ce que les greffons sont constitués par un monomère contenant des groupements époxy.

2. Messes à mouler thermoplastiques selon la revendication 1, caractérisées par une teneur en caout-

EP 0 233 473 B1

chouc qui les modifie dans le sens de la résistance aux chocs.

3. Messes à mouler thermoplastiques selon la revendication 1 ou 2, caractérisées par les teneurs suivantes:
Polycarbonate A) 8 à 90% en poids
Polyester B) 8 à 90% en poids
Copolymère greffé C) 2 à 30% en poids.

4. Utilisation des masses à mouler thermoplastiques selon l'une quelconque des revendications 1 à 3 pour la fabrication de pièces moulées.

5. Corps moulés, obtenus à partir de masses à mouler thermoplastiques selon l'une quelconque des revendications 1 à 3.